# EUROPÄISCHE PATENTSCHRIFT

(11) **EP 1 611 587 B1**
(45) Veröffentlichungstag und Bekanntmachung des Hinweises auf die Patenterteilung: **12.07.2006**
(21) Anmeldenummer: 04724993.3
(22) Anmeldetag: 01.04.2004
(51) Int. Cl.: H01F 27/14

(54) **LUFTENTFEUCHTER FUR ÖLISOLIERTE TRANSFORMATOREN, DROSSELSPULEN SOWIE STUFENSCHALTER**
AIR DE-HUMIDIFIER FOR OIL-INSULATED TRANSFORMERS, CHOKE COILS AND STEP SWITCHES
DESHUMIDIFCATEUR D'AIR DESTINE A DES TRANSFORMATEURS ISOLES A L'HUILE, BOBINE DE REACTANCE ET COMMUTATEUR A GRADINS

(30) Priorität: 04.04.2003 DE 10315719
(43) Veröffentlichungstag der Anmeldung: 04.01.2006
(73) Patentinhaber: Maschinenfabrik Reinhausen GmbH, 93059 Regensburg (DE)
(72) Erfinder: EICHERT, Manfred, 93180 Deuerling (DE); KUGLER, Kurt, 93138 Hainsacker (DE); VIERECK, Karsten, 93128 Regenstauf (DE); BRILL, Rainer, 63667 Nidda (DE)
(86) Internationale Anmeldenummer: PCT/EP2004/003448
(87) Internationale Veröffentlichungsnummer: WO 2004/088679

(56) Entgegenhaltungen:
- EP-A- 0 481 239
- DE-A- 2 257 615
- DE-A- 3 413 071
- DE-A- 3 413 888
- GB-A- 229 833
- GB-A- 1 225 673

## Beschreibung

Die Erfindung betrifft einen Luftentfeuchter, wie er als Zubehör bei ölisolierten Transformatoren, Drosselspulen oder Stufenschaltem zum Entfeuchten der in Ölausdehnungsgefäßen angesaugten Luft verwendet wird.

Ein solcher Luftentfeuchter ist aus der JP 60198710 A1 bereits bekannt. Er besitzt zwei identisch aufgebaute Filterkammern, die jeweils mit feuchteabsorbierendem Material gefüllt sind. Von unten, durch jeweils eine Glockenanordnung mit einem Ölsumpf, strömt die angesaugte Luft durch wenigstens eine der beiden Filterkammern, durchläuft dort das feuchteabsorbierende Material, wird dabei getrocknet und verlässt nach oben den Luftentfeuchter. Zusätzlich ist in jeder der beiden Filterkammern eine elektrische Heizeinrichtung vorgesehen. Wenn die Feuchtaufnahmekapazität des feuchteabsorbierenden Materials in der jeweiligen Filterkammer erschöpft ist, wird die entsprechende Heizeinrichtung eingeschaltet und damit das feuchteabsorbierende Material getrocknet und regeneriert. Zum Austritt der ausgeheizten Feuchtigkeit ist jeweils im oberen Bereich jeder Filterkammer eine Austrittsöffnung vorgesehen.

In der europäischen Patentanmeldung EP 1313112 A1 ist ein weiter entwickelter Luftentfeuchter vorgeschlagen worden. Dabei ist im Strom der getrockneten Luft, nachdem diese den eigentlichen, mit feuchteabsorbierendem Material gefüllten, Filtereinsatz durchlaufen hat, ein Feuchtesensor angeordnet, der zustandsabhängig die Heizung im Inneren des Filtereinsatzes betätigt. Dabei erfasst der Feuchtesensor den Feuchtezustand der ihn umströmenden Luft, die bereits getrocknet sein sollte. Wenn der Feuchtesensor signalisiert, dass die Feuchtigkeit in dieser angesaugten Luft einen Grenzwert überschreitet, mithin zu hoch ist, bedeutet dies, dass feuchteabsorbierende Material gesättigt ist, keine weitere Feuchtigkeit mehr aufnehmen kann und ausgetrocknet werden muss. Dann wird durch Schaltmittel der elektrische Kreis der Heizeinrichtung, vorzugsweise eine Widerstandsheizung, im Filtereinsatz geschlossen. In der Folge wird das feuchteabsorbierende Material erhitzt und damit ausgetrocknet; das bisher gebundene Wasser soll nach unten ins Freie abtropfen.

Ein weiter Luftentfeuchter ist in DE 3413071 A offenbart.

Es hat sich nun jedoch gezeigt, dass bei den bekannten Luftentfeuchtern im praktischen Betrieb sich die ausgeheizte Flüssigkeit weder durch oberhalb der Heizeinrichtung angeordnete Austrittsöffnungen entfernen lässt noch vollständig nach unten abtropft. Vielmehr schlägt sich ein Teil dieser ausgeheizten Flüssigkeit an der zylindrischen Innenwand der Filterkammer bzw. Gehäusewand des Luftentfeuchters in Form feiner Tröpfchen nieder. Diese feinen Wassertröpfchen bleiben - bedingt durch ihre Oberflächenspannung - dort hängen und lassen sich nicht entfernen. Dies ist unerwünscht, da sich im Laufe der Zeit dadurch die Feuchtigkeitskonzentration im Bereich der Innenwand ständig erhöht. Dadurch wird zudem auch der vom beschriebenen Feuchtesensor als Istwert der Feuchtigkeit der das Trockenmedium umgebenden Luft zur Bestimmung des Zustandes dieses Mediums ermittelte Wert verfälscht.

Aufgabe der Erfindung ist es demnach, die beschriebenen Nachteile des Standes der Technik zu beseitigen und einen Luftentfeuchter der genannten Art anzugeben, der durch besondere Maßnahmen sicherstellt, dass die durch Betätigung einer Heizeinrichtung aus feuchteabsorbierendem, regenerierbarem Filtermaterial ausgeheizte Flüssigkeit auch tatsächlich die Filteranordnung verlässt.

Diese Aufgabe wird durch einen Luftentfeuchter mit den Merkmalen des ersten Patentanspruches gelöst. Die Unteransprüche betreffen besonders vorteilhafte Weiterbildungen der Erfindung.

Der Hauptvorteil der Erfindung besteht darin, dass durch die besondere, erfindungsgemäße Ausbildung des Bodenteils eine definierte, lokal begrenzte Taupunktunterschreitung im Inneren der Filteranordnung erreicht wird. Damit erfolgt dann eine gezielte Kondensation der ausgeheizten Flüssigkeit an diesem Bodenteil, und die dort definiert und lokal begrenzt kondensierte Flüssigkeit läuft von dort sicher ab.

Die Erfindung soll nachfolgend an Hand von Zeichnungen beispielhaft noch näher erläutert werden.

Es zeigen:
- Figur 1: einen erfindungsgemäßen vollständigen Luftentfeuchter in seitlicher, schematischer Schnittdarstellung
- Figur 2: ausschnittsweise den unteren Bereich allein mit einem erfindungsgemäßen Bodenteil
- Figur 3: die Ansicht eines Bodenteils allein eines weiter entwickelten weiteren erfindungsgemäßen Luftentfeuchters von unten
- Figuren 4 - 6: verschiedene seitliche Schnittdarstellungen des in Figur 3 gezeigten Bodenteiles.

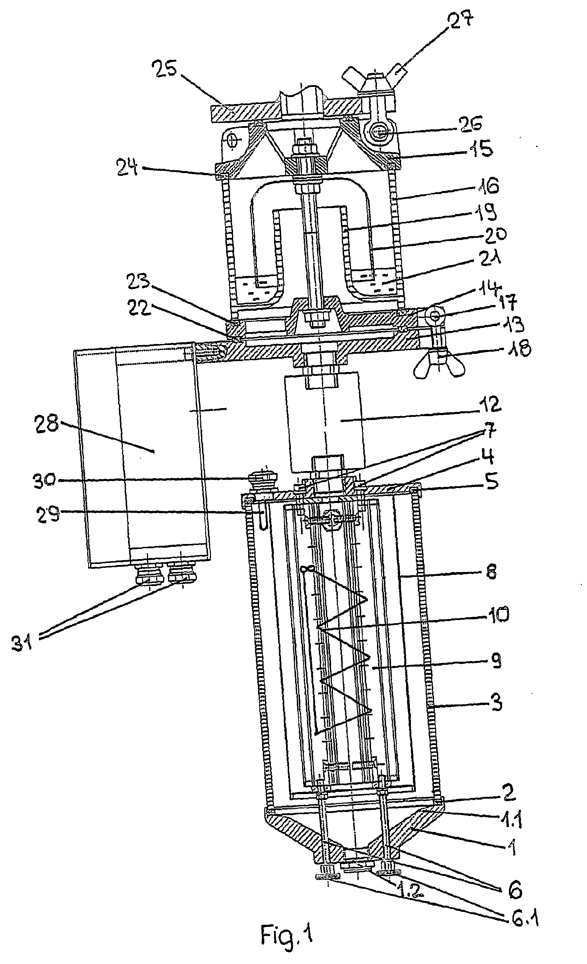

Zunächst soll zum besseren Verständnis an Hand von Figur 1 der Gesamtaufbau des Luftentfeuchters näher beschrieben werden. Der Luftentfeuchter weist ein Bodenteil 1 auf, in das eine Ringdichtung 2 eingelegt ist, auf der wiederum ein Zylinder 3 ruht. Nach oben wird der Zylinder 3 durch einen Deckel 4 abgeschlossen; auch hier ist zur Abdichtung wiederum eine Ringdichtung 5 vorgesehen. Zur Befestigung sind senkrechte Stehbolzen 6 mit unten, außerhalb des Bodenteils 1 angeschraubten Rändelmuttern 6.1 vorgesehen. Oben sind Schrauben 7 als Befestigungsmittel vorgesehen. Zentrisch im Zylinder 3 befindet sich ein luftdurchlässiges Gehäuse 8. Das Gehäuse 8 enthält ein regenerierbares Granulat 9 als feuchteabsorbierendes Material sowie eine Heizung 10, deren Heizelemente sich zwischen dem Granulat 9 befinden, d. h. von diesem umschlossen sind. Das Granulat 9 ist der Übersichtlichkeit halber hier nicht näher dargestellt. Oberhalb des Deckels 4 ist ein Magnetventil 12 vorgesehen, oberhalb des Magnetventiles 12 befindet sich ein unterer Flansch 13, an dem ein oberer Flansch 14 befestigt ist. Zwischen oberem Flansch 14 und einem Deckel 15 ist ein weiteres Gehäuse 16 angeordnet. Unterer Flansch 13 und oberer Flansch 14 sind durch Augenschrauben 17 und Flügelmuttern 18 miteinander verbunden. Das obere Gehäuse 16 weist eine besonders geformte Innenwand 19 auf, die mit einer im Inneren des Gehäuses 16 befestigten nach unten offenen Glocke 20 eine an sich bekannte Ölvorlage 21 bildet. Das Volumen der Ölvorlage 21 wird durch die tulpenförmig ausgebildete Innenwand 19 begrenzt. Zwischen unterem Flansch 13 und oberem Flansch 14 befindet sich eine weitere Ringdichtung 22, zwischen oberem Flansch 14 und Gehäuse 16 eine Ringdichtung 23 und zwischen Gehäuse 16 und Deckel 15 schließlich eine Ringdichtung 24. Oberhalb des Deckels 15 ist ein Rohrflansch 25 angeordnet; die Befestigung erfolgt wiederum durch Augenschrauben 26 und Flügelmuttern 27. Seitlich ist ein Schaltgehäuse 28 vorgesehen, das die elektrischen Anschlüsse und Verbindungsleitungen aufnimmt. Weiterhin ist seitlich innerhalb des Zylinders 3 im Bereich der Strömung der Luft ein Feuchtesensor 29 vorgesehen. Dieser Feuchtesensor 29 erfasst, wie weiter oben bereits erläutert, den Feuchtezustand der ihn umströmenden Luft. Überschreitet der erfasste Feuchtewert einen vorab eingestellten Grenzwert, bedeutet dies, dass das Granulat 9 zumindest weitestgehend gesättigt ist, keine weitere Feuchtigkeit mehr aufnimmt und ausgetrocknet werden muss. In einem solchen Fall wird im Schaltgehäuse 28 durch nicht dargestellte Schaltmittel der elektrische Kreis der Heizung 10 geschlossen. Gleichzeitig wird das Magnetventil 12 ebenfalls geschlossen. Nun wird durch die Heizung 10 das Granulat 9 erhitzt und damit ausgetrocknet. Der Übersichtlichkeit halber sind die elektrischen Anschlussleitungen sowohl von der Heizung 10 als auch vom Feuchtesensor 29, die durch eine Verschraubung 30 hin zum Schaltgehäuse 28 führen, hier nicht dargestellt. Schließlich weist das Schaltgehäuse 28 weitere Verschraubungen 31 für den Anschluss ebenfalls nicht dargestellter elektrischer Verbindungsleitungen und einer Stromversorgung auf.

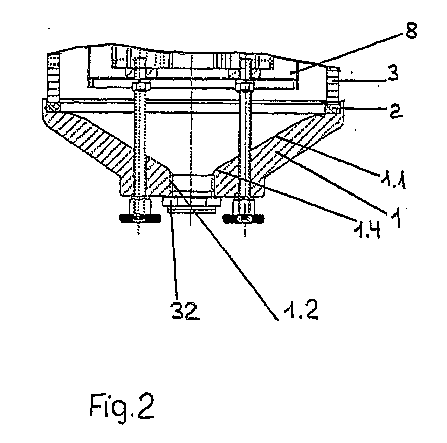

Figur 2 zeigt ausschnittsweise den unteren Teil des Luftentfeuchters, um das erfindungsgemäße Bodenteil 1 besser erläutern zu können. Das Bodenteil 1 besteht aus Metall, ist relativ dick und besitzt eine gute spezifische Wärmeleitung. Die Innenkontur 1.1 ist trichterförmig ausgebildet; an der tiefsten Stelle des Trichters in der Mitte ist eine Öffnung 1.2 vorgesehen. Durch diese Öffnung 1.2 gelangt die angesaugte und noch zu trocknende Luft in den Zylinder 3 und nachfolgend in das luftdurchlässige Gehäuse 8, in dem sie das Granulat 9 durchläuft und getrocknet wird. Durch die gleiche Öffnung 1.2 tritt die ausgeheizte Flüssigkeit, die an der Innenkontur 1.1 kondensiert ist, nach unten aus. Durch diese Ausführung des Bodenteils 1 mit seiner guten spezifischen Wärmeleitung und der erläuterten trichterförmigen Innenkontur 1.1 wird ein definiertes, lokal begrenztes Kondensieren der ausgeheizten Feuchtigkeit erreicht und damit die Aufgabe der Erfindung gelöst.

Zur Unterstützung der beschriebenen Wirkung ist es besonders vorteilhaft, den Zylinder 3 aus einem Material mit schlechter spezifischer Wärmeleitfähigkeit herzustellen.

Nach einem weiteren Merkmal der Erfindung ist an der Innenkontur 1.1 eine untere Abrundung 1.4 vorgesehen, damit werden scharfe Übergänge in der gesamten Innenkontur 1.1 vermieden. Dies fördert das erwünschte vollständige Ablaufen der dort kondensierten Flüssigkeit. Schließlich ist in Figur 2 noch eine Verschraubung 32 gezeigt, die in der Öffnung 1.2 nach unten gerichtet angeordnet ist und auf die nachfolgend noch näher eingegangen wird.

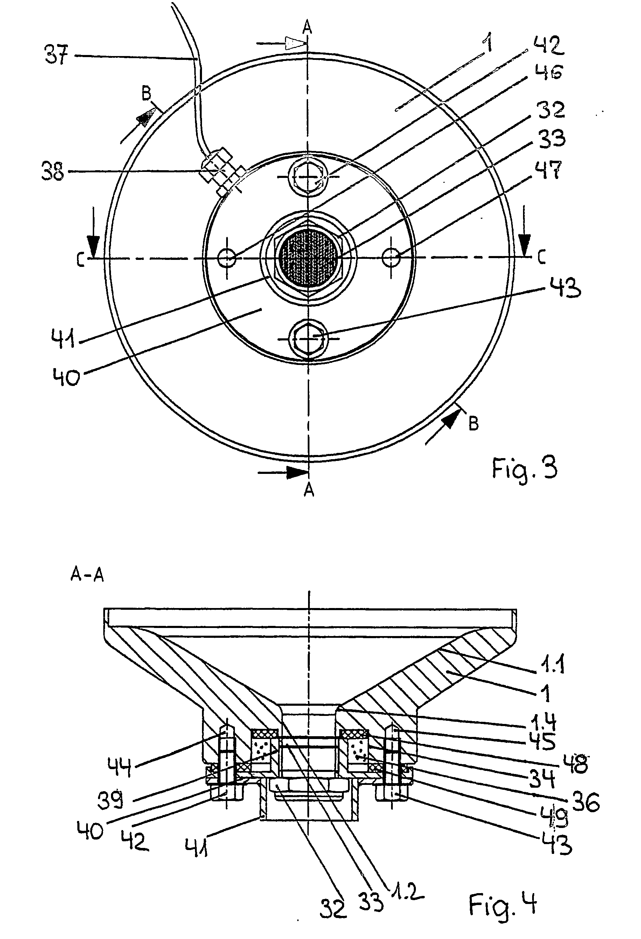

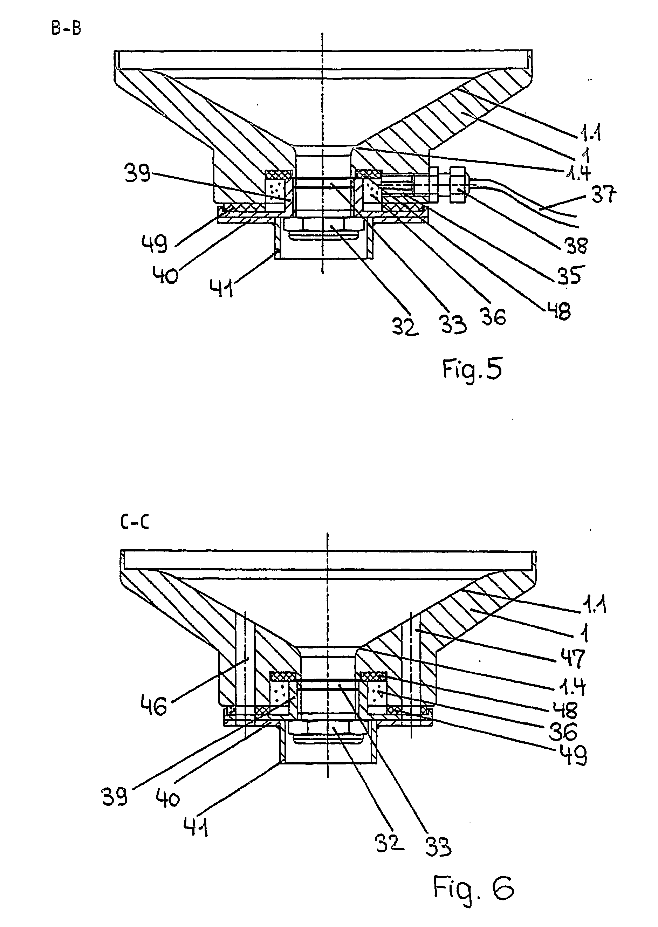

In den Figuren 3 bis 6 ist ein weiteres Bodenteil 1 gemäß der Erfindung allein dargestellt. Dieses Bodenteil 1 weist besondere Details auf, die nachfolgend näher beschrieben werden.

Die Verschraubung 32 weist hier einen Siebeinsatz 33 auf. Durch einen solchen Siebeinsatz 33 ist sichergestellt, dass keine Schmutzpartikel oder andere Fremdkörper mit der angesaugten Luft oder auf andere Weise ins Innere des Luftentfeuchters gelangen können. Der Siebeinsatz 33 kann beispielsweise aus Sinterbronze hergestellt sein, wodurch neben der beschriebenen Filterwirkung eine zusätzliche Geräuschdämpfung erreicht wird.

Im Allgemeinen wird durch einen solchen Siebeinsatz 33 das Abtropfen der ausgeheizten Flüssigkeit nach unten nicht behindert. Unter bestimmten klimatischen Verhältnissen kann jedoch bei tiefen Temperaturen die Gefahr der Vereisung dieses Bereiches bestehen. Daher kann es in vielen Fällen vorteilhaft sein, eine zusätzliche Beheizung des Bodenteiles 1 des erfindungsgemäßen Luftentfeuchters vorzusehen. Dazu ist im Bodenteil 1 eine ringförmige Aussparung 34 vorgesehen, von der eine radiale Gewindebohrung 35 nach außen führt. In der Aussparung 34 ist eine elektrische Heizung 36 angeordnet. Besonders vorteilhaft ist hierfür eine elektrische Widerstandsheizung anwendbar. Die elektrischen Anschlussleitungen 37 der Heizung 36 sind durch die Gewindebohrung 35 und eine darin eingeschraubte Kabelverschraubung 38 nach außen geführt. Nach unten ist die Aussparung 34, die, wie beschrieben, die Heizung 36 aufnimmt, durch einen Bodenflansch 39 abgeschlossen. Den äußeren Anschluss nach unten bildet ein Abdeckflansch 40, der einen zentrischen flanschförmigen Staubschutz 41 aufweist, der die Verschraubung 32 umschließt und schützt. Die Befestigung des Abdeckflansches 40 erfolgt durch Schrauben 42, 43, die in Gewinde 44, 45 im Bodenteil 1 eingeschraubt werden. Weiterhin weist das Bodenteil 1 senkrechte Durchgangsbohrungen 46, 47 auf, die zur Aufnahme der hier nicht dargestellten Stehbolzen dienen. Diese Stehbolzen sind weiter oben in Verbindung mit der Figur 1 näher beschrieben worden und tragen dort das Bezugszeichen 6.

Schließlich ist es in vielen Fällen eine thermische Entkopplung der Beheizung des Bodenteiles 1 durch die elektrische Heizung 36 sinnvoll, um sicherzustellen, dass wirklich nur, wie gewünscht, die Umgebung der Verschraubung 32 beheizt wird. Mit anderen Worten: Die elektrische Heizung 36 soll nur dort wirken, wo tatsächlich eine Gefahr der Vereisung besteht. Um diese thermische Entkopplung zu realisieren, sind eine erste Isolierscheibe 48 zwischen Bodenteil 1, elektrischer Heizung 36 und Bodenflansch 39 sowie eine zweite Isolierscheibe 49 zwischen Bodenteil 1 und Bodenflansch 39 vorgesehen. Die Isolierscheiben 48, 49 bestehen z. B. aus Teflon und verhindern damit eine Erwärmung der übrigen Teile des erfindungsgemäßen Luftentfeuchters.

## Patentansprüche

1. Luftentfeuchter für ölgefüllte Transformatoren, Drosselspule sowie Stufenschalter zum Entfeuchten der in Ölausdehnungsgefäßen angesaugten Luft,
mit einem Zylinder (3), der oben durch einen Deckel (4) und unten durch ein Bodenteil (1) abgeschlossen ist,
mit einem Innerhalb des Zylinders (3) angeordneten, mit einem feuchteabsorbierenden Granulat (9) gefüllten, luftdurchlässigen Gehäuse (8), wobei zwischen Außenwand des Gehäuses (8) und Innenwand des Zylinders (3) ein Raum vorhanden ist, der von der angesaugten Luft ausgefüllt wird, nachdem diese das Granulat (9) im Gehäuse (8) durchströmt hat,
mit einer elektrischen Heizeinrichtung (10) im Inneren des Gehäuses (8),
mit einem im Raum zwischen Außenwand des Gehäuses (8) und Innenwand des Zylinders (3) angeordneten Feuchtesensor (29), durch den bei Überschreitung eines Grenzwertes der gemessenen Luftfeuchtigkeit die Heizung (10) aktivierbar ist,
**dadurch gekennzeichnet,**
**dass** ein Bodenteil (1) aus Metall oder anderem Material mit guter spezifischer Wärmeleitfähigkeit vorgesehen ist, dessen Innenkontur (1.1) trichterförmig ausgebildet ist
und **dass** die trichterförmige Innenkontur (1.1) eine untere Abrundung (1.4) aufweist.

2. Luftentfeuchter nach Anspruch 1,
**dadurch gekennzeichnet,**
**dass** der Zylinder (3) aus einem Material mit schlechterer spezifischer Wärmeleitfähigkeit als der des Bodenteils (1) besteht.

3. Luftentfeuchter nach Anspruch 1 oder 2,
**dadurch gekennzeichnet,**
**dass** zentrisch an der tiefsten Stelle im Bodenteil (1) eine Verschraubung (32) mit einem wasserdurchlässigen Siebeinsatz (33) vorgesehen ist.

4. Luftentfeuchter nach Anspruch 3,
**dadurch gekennzeichnet,**
**dass** Siebeinsatz (33) aus Sinterbronze besteht.

5. Luftentfeuchter nach Anspruch 3 oder 4,
**dadurch gekennzeichnet,**
**dass** in einer kreisförmigen, von unten zugänglichen, die Verschraubung (32) umschließenden Aussparung (34) eine weitere Heizung (36) vorgesehen ist.

6. Luftentfeuchter nach Anspruch 5,
**dadurch gekennzeichnet,**
**dass** die weitere Heizung (36) eine elektrische Widerstandsheizung ist, deren elektrische Anschlussleitungen (37) durch eine radial in das Bodenteil (1) eingeschraubte Kabelrierschraubung (38) geführt sind.

7. Luftentfeuchter nach Anspruch 5 oder 6,
**dadurch gekennzeichnet,**
**dass** die Heizung (36) durch mindestens eine Isolierscheibe (48, 49) gegenüber dem Bodenteil (1) thermisch entkoppelt ist.

8. Luftentfeuchter nach Anspruch 5 oder 6 oder 7,
**dadurch gekennzeichnet,**
**dass** die Aussparung (34) nach unten durch einen Bodenflansch (39) und/oder einen Abdeckflansch (40), der mittels Schrauben (42, 43) am Bodenteil (1) befestigt ist, abgeschlossen ist.

## Claims

1. Air dehumidifier for oil-filled transformers, choke coils and tap changers, for dehumidification of air sucked into oil expansion vessels, comprising a cylinder (3) which is closed at the top by a lid (4) and at the bottom by a base part (1), an air-permeable housing (8) arranged within the cylinder (3) and filled with a moisture-absorbing granulate (9), wherein a space which is filled by the inducted air after this has flowed through the granulate (9) in the housing (8) is present between outer wall of the housing (8) and inner wall of the cylinder (3), an electrical heating device (10) in the interior of the housing (8) and a moisture sensor (29) which is arranged in the space between outer wall of the housing (8) and inner wall of the cylinder (3) and by which the heating means (10) is activatable when the limit value of the measured air humidity is exceeded, **characterised in that** a base part (1) of metal or another material with a good specific thermal conductivity is provided, the inner contour (1.1) is formed to be funnel-shaped, and that the funnel-shaped inner contour (1.1) has a lower radiusing (1.4).

2. Air dehumidifier according to claim 1, **characterised in that** the cylinder (3) consists of a material with a worse specific thermal conductivity than that of the base part (1).

3. Air dehumidifier according to claim 1 or 2, **characterised in that** a screw connection (32) with a water-permeable filter insert (33) is provided centrally at the deepest position in the base part (1).

4. Air dehumidifier according to claim 3, **characterised in that** the filter insert (33) consists of sintered bronze.

5. Air dehumidifier according to claim 3 or 4, **characterised in that** a further heating means (36) is provided in a circular cut-out (34) accessible from below and surrounding the screw connection (32).

6. Air dehumidifier according to claim 5, **characterised in that** the further heating means (36) is an electrical resistance heater, the electrical connecting lines (37) of which are led through a cable screw connection (38) radially screwed into the base part (1).

7. Air dehumidifier according to claim 5 or 6, **characterised in that** the heating means (36) is thermally decoupled from the base part (1) by at least one insulating washer (48, 49).

8. Air dehumidifier according to claim 5, 6 or 7, **characterised in that** the cut-out (34) is closed downwardly by a base flange (39) and/or a cover flange (40), which is fastened to the base part (1) by means of screws (42, 43).

## Revendications

1. Déshumidificateur d'air destiné à des transformateurs à huile, des bobines de réactance et des commutateurs à gradins pour déshumidifier l'air aspiré dans les réservoirs de dilatation de l'huile, comprenant un cylindre (3) fermé en haut par un couvercle (4) et en bas par une pièce de fond (1), avec une enceinte (8) perméable à l'air, remplie d'un granulat (9) absorbant l'humidité et disposée à l'intérieur du cylindre (3), avec entre la paroi extérieure de l'enceinte (8) et la paroi intérieure du cylindre (3), un espace rempli par l'air aspiré ayant traversé le granulat (9) dans l'enceinte (8), un dispositif de chauffage électrique (10) à l'intérieur de l'enceinte (8), un capteur d'humidité (29) disposé dans l'espace entre la paroi extérieure de l'enceinte (8) et la paroi intérieure du cylindre (3), permettant d'actionner le chauffage (10) en cas de dépassement d'une valeur limite de l'humidité de l'air mesurée,
**caractérisé en ce qu'**
une pièce de fond (1) en métal ou en une autre matière présentant une bonne conductibilité thermique spécifique, a un contour intérieur (1.1) en forme d'entonnoir, et le contour intérieur (1.1) en forme d'entonnoir présente un arrondi inférieur (1.4).

2. Déshumidificateur d'air selon la revendication 1,
**caractérisé en ce que**
le cylindre (3) se compose d'un matériau présentant une conductibilité thermique spécifique inférieure à celle de la pièce de fond (1).

3. Déshumidificateur d'air selon la revendication 1 ou 2,
**caractérisé en ce qu'**
au centre, à l'endroit le plus profond de la pièce de fond (1), une fixation par vis (32) comporte un tamis perméable à l'eau (33).

4. Déshumidificateur d'air selon la revendication 3,
**caractérisé en ce que**
le tamis (33) est en bronze fritté.

5. Déshumidificateur d'air selon la revendication 3 ou 4,
**caractérisé en ce qu'**
un autre chauffage (36) est prévu dans un évidement (34) circulaire, accessible par le bas et entourant la fixation par vis (32).

6. Déshumidificateur d'air selon la revendication 5,
**caractérisé en ce que**
l'autre chauffage (36) est un chauffage par résistance électrique, dont les lignes de raccordement électrique (37) traversent un passe-câbles à vis (38) vissé latéralement dans la pièce de fond (1).

7. Déshumidificateur d'air selon la revendication 5 ou 6,
**caractérisé en ce que**
le chauffage (36) est séparé thermiquement de la pièce de fond (1) par au moins une rondelle isolante (48, 49).

8. Déshumidificateur d'air selon la revendication 5, 6 ou 7,
**caractérisé en ce que**
l'évidement (34) est fermé vers le bas par une bride de fond (39) et/ou une bride de couverture (40), qui est fixée sur la pièce de fond (1) au moyen de vis (42, 43).
